# EUROPÄISCHE PATENTANMELDUNG

(11) **EP 4 166 313 A1**
(43) Veröffentlichungstag der Anmeldung: **19.04.2023**
(21) Anmeldenummer: 21450002.7
(22) Anmeldetag: 25.11.2021
(51) Int. Cl.: B30B 15/06, B30B 15/34

(54) **PRESSWERKZEUG ZUM VERPRESSEN VON COMPOUNDMISCHUNGEN**

(30) Priorität: 18.10.2021 AT 10221 U
(71) Anmelder: IAG Industrie Automatisierungsgesellschaft mbH, 2722 Weikersdorf (AT)
(72) Erfinder: Pötscher, Johannes, 7221 Marz (AT)
(74) Vertreter: Rippel, Andreas O.

(57) **Zusammenfassung**

Die Erfindung betrifft ein Presswerkzeug (1) zum Verpressen von kunststoffgebundenen Compoundmischungen. Dieses Presswerkzeug (1) weist eine Pressform (3), einen Pressstempel (2) und ein Oberwerkzeug (4) auf. Bei bekannten Presswerkzeugen bestehen alle Teile des Pressstempels aus verschiedenen Stählen, wodurch es an der Stempeloberfläche zu größeren Temperaturunterschieden kommt. Da diese Temperaturunterschiede die Qualität des Pressgutes mindern, weist zur Erreichung einer möglichst homogenen Temperaturvertrteilung bei der gegenständlichen Erfindung der Pressstempel (2) eine Ausgleichsplatte (8) aus thermisch hochleitfähigem Material auf, wobei sich dafür beispielsweise Kupferlegierungen, und zwar Werkstoffe aus dem Bereich "niedriglegiertes Kupfer" bewährt haben.

## Beschreibung

Die Erfindung betrifft ein Presswerkzeug zum Verpressen von kunststoffgebundenen Compoundmischungen, bestehend aus einer Pressform, einem Pressstempel und einem Oberwerkzeug.

Kunststoffgebundene Compounds werden bei der Herstellung von Graphitplatten in Brennstoffzellen bzw. bei der Herstellung von Reibbelägen verwendet.

Stand der Technik ist, dass die Pressform mit einer definierten Menge der zu verpressenden Compoundmischung befüllt wird. Anschließend wird die Presse geschlossen. Dabei wird eine beheizte Metallplatte, welche im Folgenden als Spiegelplatte bezeichnet wird und Teil des Oberwerkzeuges ist, auf die Pressform aufgesetzt und damit die Pressform abgedichtet. Dadurch kann der erforderliche Pressdruck aufgebaut werden. Danach wird die Compoundmischung mit Hilfe des Pressstempels, oder eines Kolbens, unter Einwirkung von erhöhtem Druck und erhöhter Temperatur verpresst.

Die verwendeten Bindemittel, meist Harze, schmelzen bei der erhöhten Temperatur des Pressvorganges und verkleben und/oder vernetzen (chemisch) die übrigen Bestandteile der Pressmischung (eben die zu verpressenden Compoundmischungen) zu einem homogenen, festen und dichten Körper.

Üblich ist, dass der Presstempel und die Spiegelplatte dabei elektrisch beheizt werden. Eine andere Heizung, z.B. mit Thermoöl ist jedoch auch möglich und Stand der Technik.

Bei den bekannten Presswerkzeugen bestehen alle Teile des Pressstempels aus verschiedenen Stählen. Dies hat zur Folge, dass insbesondere an der Stempeloberfläche, welche mit dem Pressgut in Berührung kommt, größere Temperaturunterschiede zwischen dem Rand und der Mitte von bis zu 40 Grad Celsius auftreten. Eine konstante Temperaturverteilung über die Stempeloberfläche ist nicht gegeben, wodurch die Produktqualität des Pressgutes leidet.

Beim Oberwerkzeug besteht die Heizplatte, mit welcher die Spiegelplatte verbunden ist, gemäß dem Stand der Technik ebenfalls aus Stahl, wodurch die gleichen Probleme der Temperaturunterschiede und der nicht konstanten Temperaturverteilung wie bei der Stempeloberfläche entstehen. Es kommt an der Oberfläche der Spiegelplatte zu unterschiedlichen Temperaturen in Abhängigkeit vom Abstand zur Heizpatrone.

Die Erfindung hat es sich zum Ziel gesetzt die inhomogene Temperaturverteilung innerhalb des Presswerkzeuges zu minimieren respektive zu beseitigen, wodurch die Produktqualität der kunststoffgebundenen Compounds gesteigert werden kann.

Diese Aufgabe wird durch eine Veränderung des Werkzeuges gelöst, dadurch, dass der Pressstempel eine Ausgleichsplatte aus thermisch hochleitfähigem Material aufweist. Bewährt hat sich ein Aufbau der Ausgleichsplatte aus Kupfer oder einer hochfesten Kupferlegierung. Diese Kupferlegierungen sind Werkstoffe aus dem Bereich "niedriglegiertes Kupfer". Sie werden z.B. mit Nickel, Silicium, Kobalt und Beryllium legiert und haben in der Regel eine Kupferanteil von ca. 95 %. Sie zeichnen sich durch besonders gute Wärmeleitfähigkeit bei geleichzeitig guten mechanischen Eigenschaften aus. Eine derartige Ausgleichsplatte verbessert die Temperaturverteilung über die Oberfläche des Pressstempels deutlich.

Vorstellbar sind aber auch andere thermisch hochleitfähige Materialien, wie z. B. Silberlegierungen.

Zur Erreichung einer hohen Qualität des verpressten Compounds ist es zweckmäßig, wenn auch die Heizplatte des Oberwerkzeuges aus thermisch hochleitfähigen Materialien, wie z.B. aus Kupfer- oder Silberlegierungen, wie sie oben beschrieben sind, aufgebaut ist. Dadurch wird auch im Bereich der Oberfläche der Spiegelplatte eine homogene Temperaturverteilung zur Qualitätssteigerung des fertig gepressten Compounds erreicht. Die maximalen Temperaturunterschiede werden dadurch so weit als möglich verringert.

Eine gute Ausgestaltung wird erreicht, wenn die Ausgleichsplatte des Pressstempels eine Stärke von 3 bis 50 mm aufweist.

Vorteilhaft ist es, wenn die Heizplatte des Oberwerkzeuges eine Stärke von 15 bis 50 mm aufweist.

Gute Erfolge beim Verpressen von Compoundmischungen sind dadurch erreichbar, dass die Heizleistungen der Heizpatronen im Bereich zwischen 100 und 20.000 Watt liegen.

Gute Erfolge sind weiters dann zu erzielen, wenn die thermisch hochleitfähige Ausgleichsplatte des Pressstempels und/oder die Heizplatte des Oberwerkzeuges eine Wärmeleitfähigkeit im Bereich von 80 bis 500 Watt/(m K) aufweisen.

Nachstehend wird die erfindungsgemäße Vorrichtung in den Zeichnungen anhand eines Beispiels dargestellt. Dabei zeigt:
die Fig. 1 ein geöffnetes Presswerkzeug, eingebaut in eine Presse, in Vorderansicht.
Die Fig. 2 zeigt das identische in eine Presse eingebaute Presswerkzeug, welches jedoch geschlossen ist, in Vorderansicht.
Die Fig. 3 zeigt in einem Längsschnitt den Pressstempel.
Die Fig. 4 zeigt in einem Längsschnitt das Oberwerkzeug.

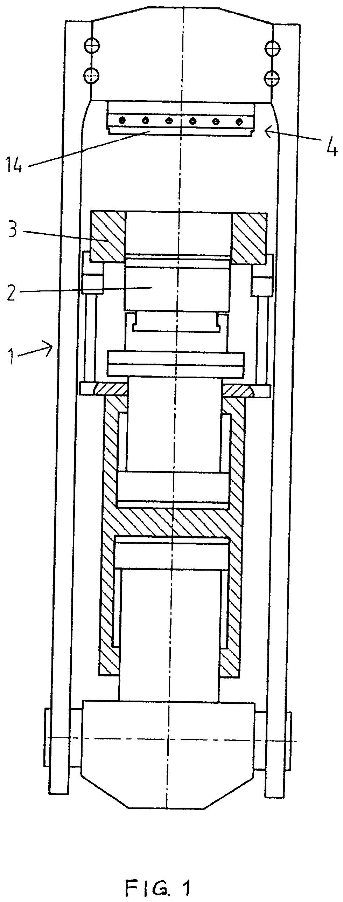

Die Fig. 1 zeigt ein geöffnetes Presswerkzeug 1. Das Presswerkzeug 1 weist einen Pressstempel 2 auf. Weiters ist eine Pressform 3 angeordnet. Diese Pressform 3 wird beim Betrieb des Presswerkzeuges 1 bei jedem Pressvorgang mit einer definierten Menge der zu verpressenden Compoundmischung befüllt.

Im geöffneten Zustand des Presswerkzeuges 1 liegt ein Oberwerkzeuges 4 frei, das heißt dieses liegt nicht auf der Pressform 3 auf. Der untere Teil des Oberwerkzeuges 4 wird durch eine Spiegelplatte 14 gebildet.

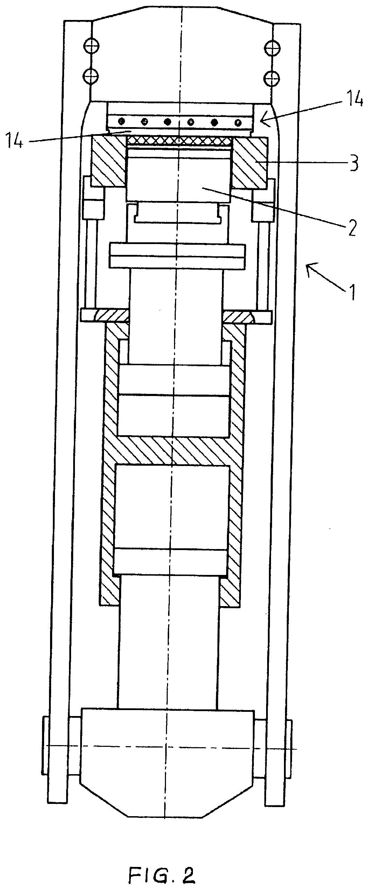

Die Fig. 2 zeigt das identische Presswerkzeug 1 in geschlossenem Zustand. Der Pressstempel 2 verpresst die kunststoffgebundenen Compoundmischungen, mit welchen die Pressform 3 befüllt ist. Das beheizte Oberwerkzeug 4, dessen unterer Teil durch die Spiegelplatte 14 gebildet wird, wird auf die Pressform 3 aufgesetzt, um eine Abdichtung zu erreichen. Aufgrund der Abdichtung kann der erforderliche Pressdruck aufgebaut werden. Ohne Abdichtung würden die Compoundmischungen beim Verpressen entweichen.

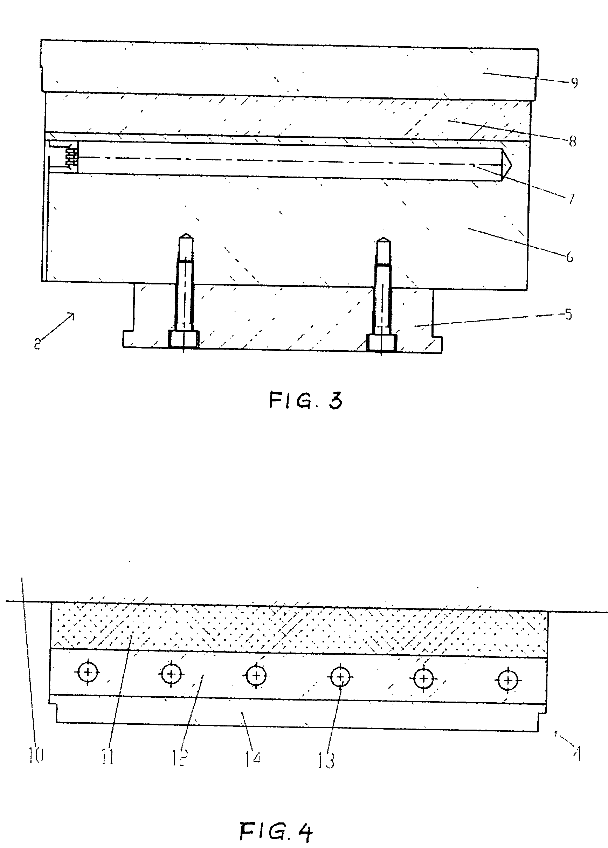

Die.Fig. 3 zeigen im Detail den Aufbau des Pressstempels 2. Basis des Pressstempels 2 ist ein Stempelfuß 5. Der Stempelfuß 5 ist mit einem Stempelunterteil 6 verbunden. Im oberen Bereich des Stempelunterteils 6 befindet sich eine Heizpatrone 7.

Um eine möglichst homogene Temperaturverteilung zu gewährleisten ist der Stempelunterteil 6 knapp oberhalb der Heizpatrone 7 mit einer Ausgleichsplatte 8 verbunden. Diese Ausgleichsplatte 8 ist aus einem thermisch hochleitfähigen Material aufgebaut. Bewährt haben sich Kupferlegierungen, und zwar Werkstoffe aus dem Bereich "niedriglegiertes Kupfer". Der Kupferanteil von ca. 95% wird zum Beispiel mit Nickel, Silicium, Kobalt und Beryllium legiert, wodurch sich bei gleichzeitig hoher mechanischer Festigkeit eine besonders gute Wärmeleitfähigkeit ergibt.

Zur unmittelbaren Durchführung der Pressung befindet sich oberhalb der Ausgleichsplatte 8 eine Pressplatte 9. Diese Pressplatte 9 kommt mit der zu verpressenden Compoundmischung in Berührung. In der Figur nicht gezeigt ist ein ebenfalls möglicher vertikaler (und nicht horizontaler) Einbau der Heizpatrone. Bei einem derartigen Einbau könnte die Heizpatrone auch durch die Ausgleichsplatte in die Pressplatte ragen.

Die Fig. 4 zeigt einen Längsschnitt durch das Oberwerkzeug 4. Das Oberwerkzeug 4 ist an einem oberen Pressenjoch 10 befestigt. An dem oberen Pressenjoch 10 ist eine Isoliermaterialplatte 11 befestigt, welche dazu dient, die beheizten Teile des Oberwerkzeuges 4 thermisch von den restlichen, nicht beheizten Teilen, zu trennen.

Auf der Isoliermaterialplatte 11 ist eine Heizplatte 12 befestigt. Die Heizplatte 12 ist aus thermisch hochleitfähigem Material aufgebaut. Bewährt haben sich mit Nickel, Silicium, Kobalt und Beryllium legierte Kupferlegierungen. In die Heizplatte 12 sind Heizpatronen 13 eingepresst oder eingeklebt. Die Heizplatte 12 ist an ihrer Unterseite mit einer Spiegelplatte 14 verbunden. Die Spiegelplatte 14 kommt mit den zu verpressenden kunststoffbasierten Compounds in Kontakt oder alternativ (nicht gezeigt) bei Reibbelägen, teilweise auch mit einem Belagträger, welcher aus Metall oder Kunststoff besteht und mit welchem der Reibbelag verpresst wird, in Kontakt.

Vorstellbar sind Abänderungen des erfindungsgemäßen Presswerkzeuges. Das Presswerkzeug muss zwar immer einen Pressstempel und eine Spiegelplatte (als jeweiliges Gegenstück) aufweisen. Zur Vereinfachung wäre es aber möglich, dass lediglich entweder der Pressstempel eine aus thermisch hochleitfähigen Materialien aufgebaute Ausgleichsplatte aufweist oder die Spiegelplatte weist eine aus thermisch hochleitfähigen Materialien aufgebaute Heizplatte auf.

## Patentansprüche

1. Presswerkzeug (1) zum Verpressen einer Compoundmischung, bestehend aus einer Pressform (3), einem Pressstempel (2) und einem Oberwerkzeug (4), **dadurch gekennzeichnet, dass** der Pressstempel (2) eine Ausgleichsplatte (8) aus thermisch hochleitfähigem Material aufweist.

2. Presswerkzeug (1) nach Anspruch 1, **dadurch gekennzeichnet, dass** die Heizplatte (12) des Oberwerkzeuges (4) aus thermisch hochleitfähigem Material aufgebaut ist.

3. Presswerkzeug (1) nach Anspruch 1 oder 2, **dadurch gekennzeichnet, dass** die Ausgleichsplatte (8) des Pressstempels (2) eine Stärke von 3 bis 50 mm aufweist.

4. Presswerkzeug (1) nach einem der Ansprüche 1 bis 3, **dadurch gekennzeichnet, dass** die Heizplatte (12) des Oberwerkzeuges (4) eine Stärke von 15 bis 50 mm aufweist.

5. Presswerkzeug (1) nach einem der Ansprüche 1 bis 4, **dadurch gekennzeichnet, dass** die Heizleistungen der Heizpatronen (7) und (13) jeweils zwischen 100 und 20.000 Watt aufweisen.

6. Presswerkzeug (1) nach einem der Ansprüche 1 bis 5, **dadurch gekennzeichnet, dass** die Ausgleichsplatte (8) des Pressstempels (2) und/oder die Heizplatte (13) des Oberwerkzeuges (4) eine Wärmeleitfähigkeit im Bereich von 80 bis 500 Watt/(m K) aufweisen.
